# EUROPEAN PATENT APPLICATION

(11) **EP 2 242 224 A1**
(43) Date of publication of application: **20.10.2010**
(21) Application number: 10167579.1
(22) Date of filing: 17.09.2008
(51) Int. Cl.: H04L 27/26, H04L 25/03

(54) **Method and system for transmitting and receiving broadcasting signals**

(30) Priority: 18.09.2007 US 973420 P
(62) Divisional of application: 08832160.9
(71) Applicant: LG Electronics, Seoul, 150-721 (KR)
(72) Inventor: Ko, Woo Suk, 137-724, Seoul (KR); Moon, Sang Chul, 137-724, Seoul (KR)
(74) Representative: Cabinet Plasseraud

(57) **Abstract**

There is disclosed a method of transmitting a broadcasting signal, the method comprising: encoding bits of Layer-1, L1, signaling data by a Forward Error Correction, FEC, scheme, wherein the L1 signaling data includes L1_CHANGE information indicating that the contents of the L1 signaling data will change; mapping bits of the encoded L1 signaling data into L1 signaling data symbols; frequency-interleaving the mapped L1 signaling data symbols; modulating the frequency-interleaved L1 signaling data symbols by an Orthogonal Frequency Division Multiplexing, OFDM, method; and transmitting a signal frame including preamble and service data, wherein the preamble includes P1 and P2 at the beginning of the signal frame and the P2 includes the L1 signaling data symbols.

A related apparatus is also disclosed.

## Description

### Technical Field

The present application claims the benefit of priority under 35 U.S.C. 119 of U.S. provisional patent application No. 60/973,420 filed on Sep. 18, 2007, which is hereby expressly incorporated by reference.

The present invention relates to a method of efficiently transmitting and receiving signals and efficient transmitter and receiver for an OFDM (Orthogonal Frequency Division Multiplexing) system including a TFS (Time-Frequency Slicing).

### Background Art

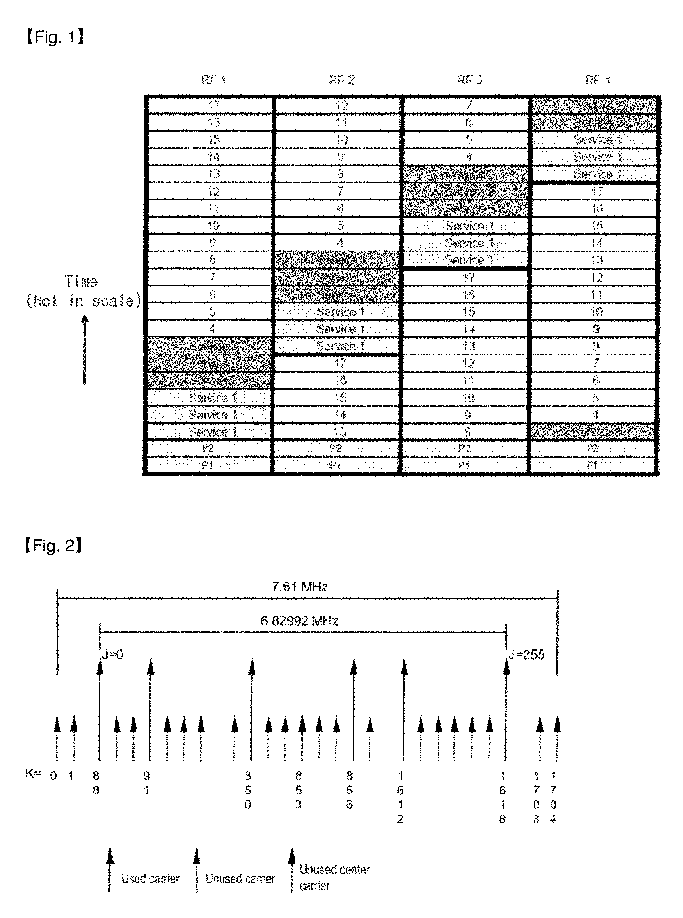

TFS (Time-Frequency Slicing) has been introduced for next generation broadcasting network. As shown in Fig. 1, one broadcasting service can be transmitted throughout time-RF channel domains. The figure shows a statistical multiplexing gain which enables transmitting more services efficiently by expanding space from previous single RF channel band to a multiple RF channel bands during multiplexing step in a transmitter. In addition, frequency diversity gain can be obtained by spreading a single service over multiple RF channels.

A frame structure to transmit signals using Time-Frequency Slicing scheme has been suggested. The frame structure shown in Fig. 1 transmits pilot signals or reference signals named as P1 and P2 in the beginning of each frame. P1 is a pure pilot symbol which has 2K FFT mode and 1/4 guard interval. P1 is designed to have 6.82992MHz within total 7.61MHz bandwidth. Other bandwidths are designed to show similar characteristics as this. To show the similar characteristics, 256 carriers out of 1705 active carriers can be used or one in every six carriers can be used in average. The pattern in Fig. 2 shows an irregular pattern having intervals of 3, 6, and 9.

Used carriers can be modulated by BPSK (Binary Phase Shift Keying) and PRBS (Pseudo Random Bit Sequence). The carriers represent FFT size used in P2 by using multiple PRBS. By using the P1 and P2, a receiver can obtain information such as existence of a TFS frame, a size of FFT, and can perform a coarse frequency, timing synchronization. P2 has identical FFT size and guard interval as data symbols. One in every three carriers of the P2 symbol can be used as a pilot carrier.

P2 has been suggested for four purposes. First, it has been suggested for a fine frequency and fine timing synchronization. Second, for transmitting layer information (L1). L1 describes physical parameters and structure of frame in transmitted signals. Third, for performing channel estimation to decode P2 symbol. The decoded information can be used as an initial value for channel estimation for data symbols at later steps. Finally, it has been suggested to transmit additional layer information (L2). L2 describes information related to transmitted service. Consequently, a receiver can gather information in a TFS frame just from decoding the P2. Thus, channel scan can be performed efficiently.

Basically, P2 can be composed of two OFDM symbols in 8k mode and is composed of a single symbol for a bigger FFT size, and can be composed of multiple symbols for a smaller FFT size. By the composition, signaling capacity that can be transmitted through P2 can be maintained as same as at least that of 8k mode.

32k: a single P2 symbol

16k: a single P2 symbol

8k: two P2 symbols

4k: four P2 symbols

2k: eight P2 symbols

If suggested P2 symbols do not meet a required signaling capacity, additional OFDM symbols can be added to the suggested symbols. L1 that is transmitted to P2 can be encoded by coding which has error correction capacity and can be interleaved throughout P2 symbol by interleaver to have robust characteristics against impulse noise.

Similarly, L2 can be encoded by a coding which has error correction capacity, can be encoded by the same code for data symbol, and can be interleaved throughout P2 symbols by interleaver.

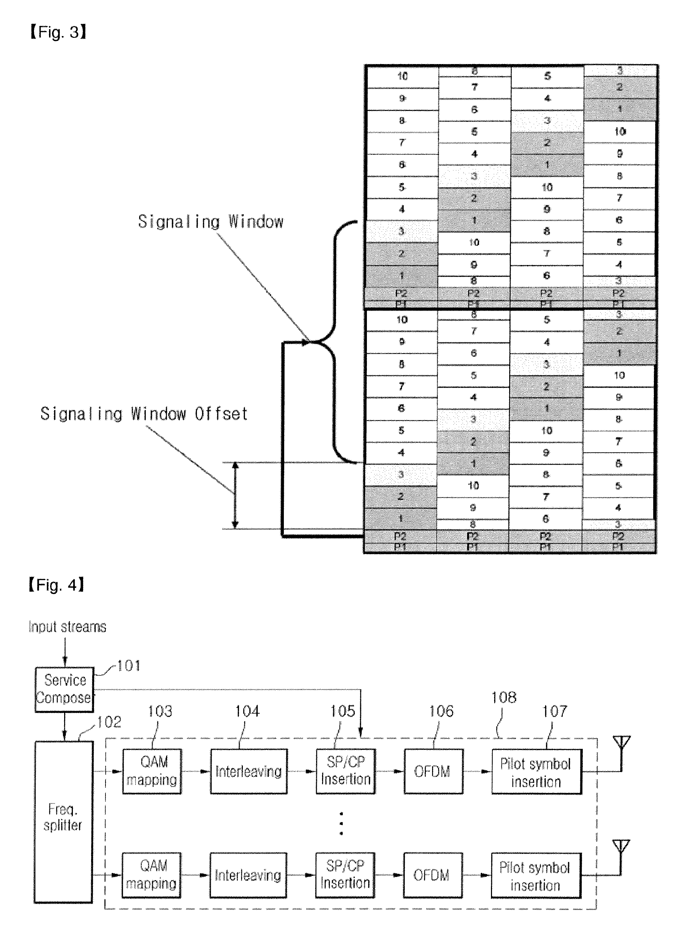

L1 has information of frame structure and physical layer required for a receiver to decode data symbols. Thus, if P2 can provide information for any data symbol following right after the P2, a receiver may have difficulty in decoding the signals. As a solution to this problem, as shown in Fig. 3, L1 located in P2 can have information about a frame length. However, it has information of a location distanced a signaling window offset from P2.

To perform a channel estimation for decoding data symbol, data symbols can include varying structures of scattered pilots and continual pilots. L1 signaling can include following information.

Length indicators, for the flexible use of L1 and L2 signaling channel

Frequency indicator

Guard Interval

Maximum number of FEC blocks per frame, for each physical channel

Actual (real) number of FEC blocks in FEC block buffer for current and previous frame for each physical channel

For each slot

Frame number for the service

Slot start address, with OFDM-cell (carrier) accuracy

Slot length in terms of OFDM-cells

Number of padding bits in the last OFDM-cell

Service modulation

Service code rate

Information on the MIMO-scheme

Cell-ID

Flags for notification messages and service information

Frame number of current frame

Additional bits for future use

### Disclosure of Invention

### Technical Problem

It is, therefore, an object of the present invention to provide a receiver to receive TFS frames.

Another object of the present invention is to provide novel pilot structures and signaling methods in TFS frame structure for an efficient transmitter and receiver.

### Technical Solution

According to an aspect of the present invention, there is provided a method of transmitting a broadcasting signal according to claim 1.

According to another aspect of the present invention, there is provided and apparatus for transmitting a broadcasting signal according to claim 8.

It is to be understood that both the foregoing general description and the following detailed description of the present invention are exemplary and explanatory and are intended to provide further explanation of the invention as claimed.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

### Advantageous Effects

According to the present invention, it is possible to provide a novel pilot structures and signaling methods in TFS frame structure for an efficient transmitter and receiver.

### Description of Drawings

The accompanying drawings, which are included to provide a further understanding of the invention and are incorporated in and constitute a part of this application, illustrate embodiment(s) of the invention and together with the description serve to explain the principle of the invention. In the drawings:

Fig. 1 is a distribution of a service being spread over RF channels in Time-Frequency Slicing system according to the prior art.

Fig. 2 is a distribution of carriers for P1 symbols according to the prior art.

Fig. 3 is a distribution of information about frame of L1 in P2 symbol according to the prior art.

Fig. 4 is a block diagram of an example of a transmitter in a TFS system according to the present invention.

Fig. 5 is a block diagram of an example of a receiver in a TFS system according to the present invention.

Fig. 6 is an example of pilots indexed according to even numbers according to the present invention.

Fig. 7 is a block diagram of an example of a receiver in a TFS system to perform a P2 symbol decoding according to the prior art.

Fig. 8 is a block diagram of an example of a receiver decoding P2 symbol by using P1 symbol according to the present invention.

Fig. 9 is a combination of FFT sizes and guard intervals that are applicable in a TFS system according to the present invention.

Fig. 10 is a block diagram of an example of a receiver using P1 symbol and P2 symbol according to the present invention.

Fig. 11 is a TFS frame structure according to the present invention.

Fig. 12 is a block diagram of an example of a receiver utilizing P1 symbol guard signaling according to the present invention.

Fig. 13 is a distribution of scattered pilot in a TFS system.

Fig. 14 shows a structure where a service can be located.

Fig. 15 shows one example of switching services.

Fig. 16 is a receiver that can be used in a TFS system according to the prior art.

Fig. 17 is a block diagram of an example of a receiver according to the present invention.

Fig. 18 and Fig. 19 are showing information included in a static part of L1 according to the present invention.

Fig. 20 is a structure of TFS ensemble according to the present invention.

### Best Mode for Carrying out the Invention

Reference will now be made in detail to the preferred embodiments of the present invention, examples of which are illustrated in the accompanying drawings. Wherever possible, the same reference numbers will be used throughout the drawings to refer to the same or like parts.

According to one embodiment, a frame structure for an efficient transmission in a TFS system can be provided.

According to another embodiment, improved and robust detection and offset estimation can be realized by correcting P1 symbols. In addition, channel information for P2 decoding can be provided by correcting a transmission mode.

According to yet another embodiment, calculations required for detecting P2 symbol can be eliminated and FFT size expansion can be performed easily by correcting P2 symbol in a TFS system.

### Mode for Invention

According to yet another embodiment, a method for easily locating service and pilot location can be provided by numbering data symbol.

According to yet another embodiment, time and amount of calculations required to detect and restore the signal by a receiver can be reduced greatly. Specifically, the time required to restore transmitted signals can lead to a limitation of number of slots that can be occupied by a service. A method that can vary the size of service can be provided.

In addition, a receiver according to one of the embodiment can perform faster and can cost less than receivers according to prior arts.

According to yet another embodiment, a method to reduce physical load and latency at a receiver can be provided by providing a method of efficiently transmitting P1 and P2 symbols.

Finally, by a novel signaling, a method of recognizing a newly added TFS ensemble automatically at a receiver can be provided.

Fig. 4 shows an example of a transmitter in TFS system according to the present invention.

Data that need to be transmitted can be transformed into TFS frames by being assorted according to service by the Service Composer (101), then can be formed into FEC block and baseband frame, then can be interleaved, and finally can be scheduled in TFS frame.

Frequency splitter (102) can send the data to modulators (108) after assorting the data for each RF channels in TFS frames. Afterwards, at each modulator, QAM mapping (103) can modulate the data into QAM signals. Interleaver (104) can perform frequency and bit interleaving. Pilot symbol insertion (105) can insert scattered and continual pilots into symbols. Then, OFDM modulator (106) can perform Orthogonal Frequency-Division Multiplexing for the data.

Finally, pilot symbol insertion (107) can insert pilot symbols including P1 and P2 to OFDM symbol by using signaling information received from the Service Composer (101).

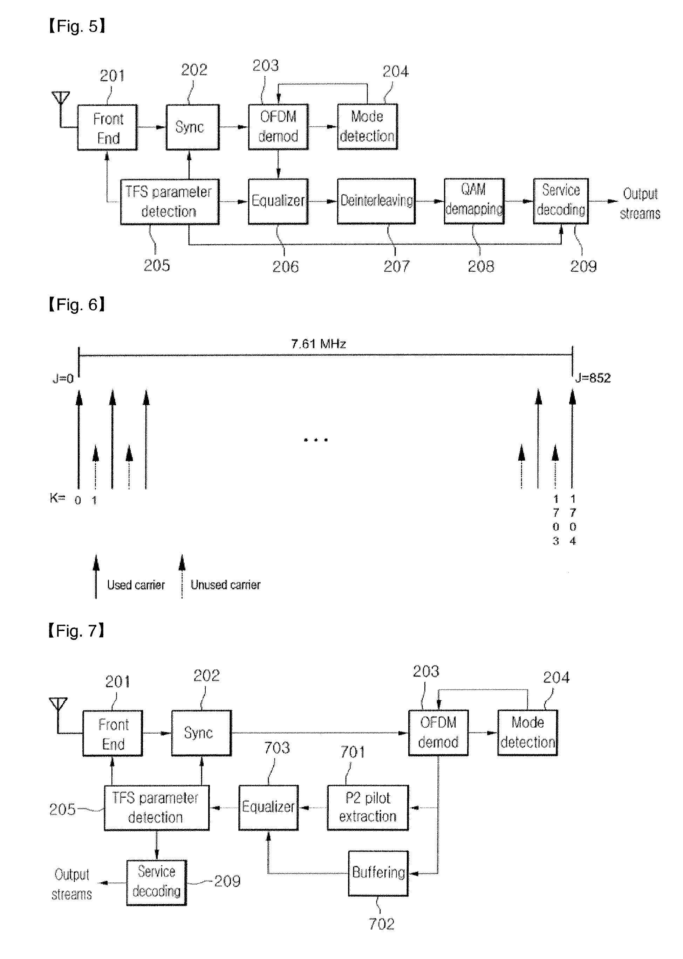

Fig. 5 shows an example of a receiver of TFS system according to the present invention. For the receiver to acquire TFS system parameters of the received data, signals received by Front End (102) can be synchronized by the Sync (202) using guard interval and other information.

For extracting P1 symbol, synchronized signals can be demodulated by OFDM demod (203) by using predetermined P1 symbol parameters. Afterwards, the information of P2 and data symbols such as FFT size and length of the guard interval can be extracted by Mode detection (204).

The extracted information including FFT size and guard interval of the P2 and data symbol can be transmitted to OFDM demod (203) and OFDM demodulation can be performed for symbols other than P1 symbol. In addition, information extracted from Mode detection (204) can be transmitted to Sync (202) and Front End (201).

Afterwards, Equalizer (206) can compensate channel distortion. TFS parameter detection (205) can obtain TFS frame structure information, and physical layer information from the P2 and(or) data symbol.

The above information can be transmitted to Front End (201) and Sync (202) for a proper synchronization. In addition, other necessary information can be transmitted to Service decoding (209).

By these procedures, a receiver can get information of TFS frame structure information and can locate the location of service. Afterwards, physical layer data can be equalized by Equalizer (206) by using pilot symbols such as continual pilots, scattered pilots, then can be transformed by Deinterleaving (207) and QAM Demapping (208), then can be decoded by Service decoding (209) and outputted as streams.

The role of P1 symbol in TFS system can be enabling a receiver to detect P1 fast, giving a receiver information about FFT size, and enabling a receiver to perform coarse frequency and timing synchronization. According to the present invention, novel P1 symbol can be designed to enhance the aforementioned roles.

According to one embodiment of the present invention, P1 symbol of TFS frame can be constructed such that every even numbered carrier be used as pilot and every odd numbered carrier be used as null carrier or unused carrier.

Alternatively, every even numbered carrier can be used as null carrier or unused carrier and every odd numbered carrier can be used as pilot.

Pilot symbols according to present invention can be called Even or Odd-numbered symbol as opposed to pilot symbols according to prior art. Pilot symbols according to present invention can have more pilot carriers than pilot symbols in prior art.

Fig. 6 shows an example of Even-numbered pilot according to present invention.

According to present invention, by using larger number of pilot carriers in the structure of symbols, more robust detection capability and offset estimation in a frequency selective fading channel environment can be achieved.

In addition, by arranging pilots in an orderly fashion, a receiver can detect new P1 symbol simply by comparing energies of received odd-numbered carriers and even-numbered carriers.

For a case of coarse offset estimation where transmitted pilot carriers are PRBS (Pseudo Random Bit Sequence) modulated, correlation calculation can be performed. The calculation is also required in symbol structure of prior art to determine size of FFT of P2. The same calculation can be used to detect FFT size of P1 symbol. This calculation can be performed at Mode detection (204) shown in Fig. 5.

Even or Odd numbered P1 symbols according to present invention can be applied in TFS frame in various fashion.

According to the first example of the present invention, pilot symbol structure can be applied while keeping parameters of prior art such as 1/4 guard interval and 2k mode. For such a case, receiver can use 2k FFT to detect P1 symbols according to present invention. Processes performed afterwards can be conventional methods.

According to the second example according to the present invention, P1 symbols can be transmitted in a mode which has the biggest FFT size and a longest guard interval at the FFT size in a TFS system. For such a case, P1 symbols transmitted using fixed parameters can be detected accordingly. In addition, a P1 symbol transmitted in that fashion can provide channel information that can be used to decode a P2 symbol which follows the P1 symbol.

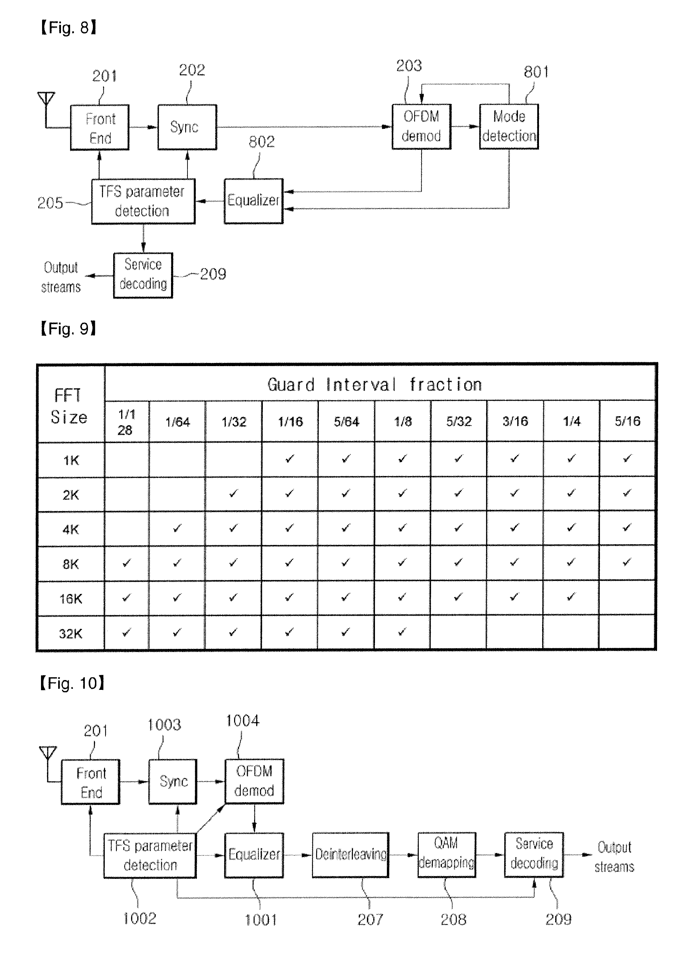

P2 symbol, just like data symbol, is a symbol that can be transmitted using various transmission mode described in Fig. 9 According to present invention, for a situation where P1 symbol is transmitted with the biggest FFT size and the longest guard interval at the FFT size, even with the longest delay spread that can be defined by system, channel information for all FFT sizes of P2 can be gathered without loss.

P1 symbols according to conventional art show irregular pattern which can make it difficult to obtain channel information or can cause loss. However, structure according to present invention, channel information can be easily obtained because P1 symbols are arranged in an orderly fashion.

Fig. 7 shows a receiver to perform P2 symbol decoding according to prior art. According to Fig. 7, to decode P2 symbol, P2 pilot extraction (701) can gather channel information by extracting pilot carriers of P2. Equalizer (703) requires the channel information to decode P2, thus, P2 data should be buffered by buffering (702) while P2 pilot extraction and a channel information calculation are performed. Consequently, there can be a delay in synchronization.

Fig. 8 shows a receiver decoding P2 symbol using P1 according to the present invention.

Unlike conventional art, the receiver according to the present invention can apply information gathered from P1 at Mode detection (801) to P2 and perform decoding through Equalizer (802). Consequently, data buffering and latency for gathering channel information which shows channel status of P2, as shown in the conventional art, can be reduced. In turn, this can reduce a synchronization time for the whole system.

Fig. 9 shows a combination of FFT size that can be applied to TFS system and guard intervals. According to the figure, P1 symbol can be transmitted as a symbol having size of 32K FFT and 1/8 guard interval.

In addition, for a case where channel estimation for decoding P2 symbol is performed by transmitting P1 symbol having regularly arranged pilot carriers and having the biggest FFT size and a longest length of guard interval at that size, additional buffering and delay in synchronization at receiver side can be reduced.

According to the third embodiment of the present invention, P1 and P2 symbols can be transmitted in a mode which has the biggest FFT size and the longest guard interval at that FFT size.

At this point, in addition to the advantages of second embodiment, additional advantage can be achieved. In conventional art, data symbol and FFT size information of P2 symbols are included in P1 symbol and transmitted in PRBS pattern. In other words, different PRBS means different FFT size. Mode detection (204) of receiver performs PRBS correlation calculation to determine one PRBS from another.

That means, to decode P2 symbol, detection calculation for all PRBS pattern for P1 symbol should be performed and guard interval detection calculation of data symbol and P2 symbol for detecting guard interval of P2 symbol should be performed. This can make receiver complicated and cause delay in synchronization process. Also, later expansion of FFT size can become difficult.

According to the present invention, receiver can detect and decode P1 and P2 symbols based on already known fixed FFT size and guard interval without additional calculation for detecting P2 symbol. In addition, when used with the method which uses channel estimation using P1 symbol for P2 decoding, correlation calculation, data buffering, and processing latency required in a conventional receiver can be reduced.

When this method is used, channel information gathered from P2 symbol may not have loss of information just like information gathered from P1, thus, the channel information gathered from P2 symbol can be used as an initial channel information for data symbol which follows P2 symbol.

According to one embodiment of this present invention, FFT size of data symbol can be transmitted in P2. By this, later expansion of FFT size can be easily realized and FFT size detection can be simplified.

Fig. 10 shows an example of system using P1 and P2 according to the present invention. As opposed to conventional receiver, Mode detection (204) can be eliminated. New Equalizer (1001) and TFS parameter detection (1002) can perform signaling of information of FFT size of data symbol and guard interval information. Thus, more efficient system can be realized. In addition, Sync (1003) and OFDM demod (1004) can perform calculation for data symbols according to TFS parameters obtained from synchronization and calculation for predetermined P1 and P2 symbols.

As shown in Fig. 9, in this example, P1 and P2 are transmitted as symbols having 32K FFT size and 1/8 guard interval. The embodiment according to the present invention can be applied to a case where P1 symbols showing pilot carriers arranged in orderly fashion. In addition, for a case where a predetermined FFT size and guard interval is equally applied to P1 and P2, this example can be applied.

According to the fourth example of the present invention, P1 and P2 symbols can be transmitted in a mode which has same FFT size and guard interval as data symbol. In this case, load at a receiver side can be reduced while advantages from the third example of the present invention are maintained.

The receiver can perform calculation to get location of OFDM symbol and can obtain the FFT size at the same time. Guard interval correlation characteristics can be used to get the location of OFDM symbol and FFT size can be obtained. By acquiring OFDM symbol location and FFT size at the same time, PRBS decoding process of P1 for gathering FFT size can become unnecessary.

In addition, by using result of channel estimation using P1 for P2 decoding, data buffering for P2 decoding and extra latency required by conventional receiver can be reduced. In addition, by using a same FFT size for data symbol, P1, and P2, receiver can be simplified and load from performing mode conversion in real time by FFT processor can be reduced.

To implement the features, a receiver shown in Fig. 10 can be used. It can operate in a simple fashion because, as opposed to the third example, it can work in a mode which uses a single FFT size and a guard interval acquired by OFDM demod (1004) and Sync (1003).

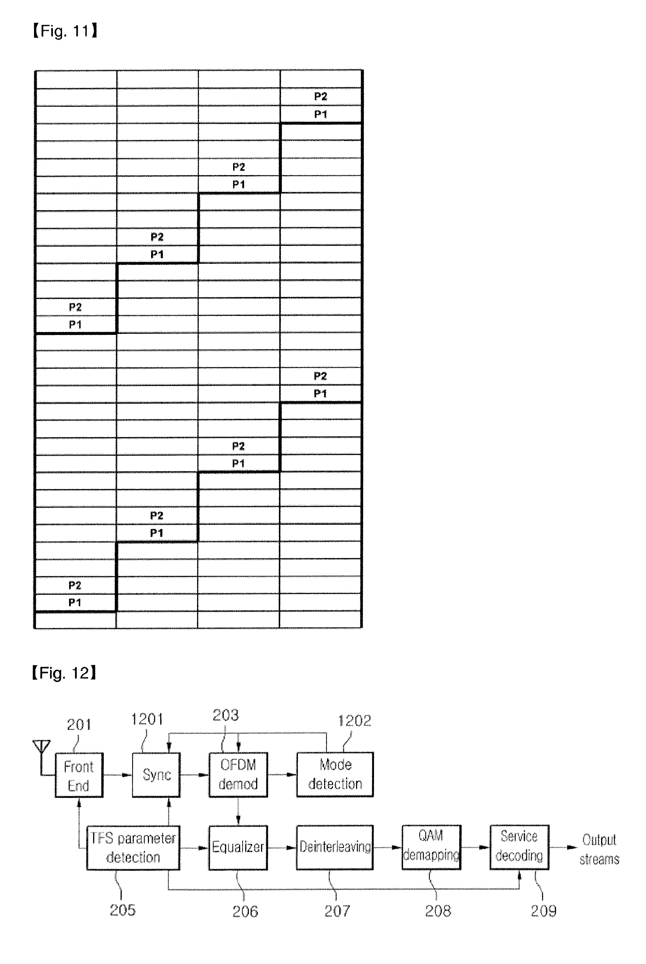

Fig. 11 shows a TFS frame structure according to the present invention. P1 and P2 symbols can be dispersed in time domain in a fashion as shown in Fig. 11 as opposed to conventional art. In this way, P2 symbol can have diversity gain in both frequency and time domains.

In addition, when receiver fails to decode P2 symbol, a time delay equivalent of a TFS frame may occur in conventional art. However, according to frame structure according to the present invention, receiver can obtain P2 for that RF channel while switching to a next RF channel, thus, latency required to decode P2 can be reduced.

In a conventional TFS system, P2 symbol has same FFT size and guard interval as data symbol. For a receiver to decode P2 symbol, P1 symbol PRBS pattern should be extracted and data symbol and guard interval in P2 symbol should be detected.

Detecting P2 symbol has a close relationship with delay in performing synchronization in TFS system, thus, can affect system performance. This invention can provide an easier way to detect P2 symbol.

In addition to transmitting P1 symbol with FFT size of P2 in PRBS pattern, P2 guard interval mode can be added. Guard interval mode information can be included to part of P1 symbol pilot carriers. In this case, calculation and processing latency that might occur for extracting P2 symbol guard interval mode can be reduced.

Fig. 12 shows a system which uses guard interval signaling of P1 symbol according to present invention. As opposed to conventional art, by transmitting guard interval mode acquired from Mode detection (1202) to Sync (1201), P2 and data symbol detection and decoding can be performed fast.

In another example, FFT size or guard interval mode can be transmitted as a predetermined combination. This can allow a receiver to detect the FFT size and guard interval easily. In addition, advantages from aforementioned combination with P1 can be obtained. This is similar as the example shown in Fig. 10.

In addition, P2 symbol can be composed of multiple OFDM symbols, a single OFDM symbol having 16K, 32K FFT size, or additional symbols depending on required amount of information. At this time, information in P2 can be encoded using error correction code and can be interleaved in P2 to acquire robustness against impulse noise.

Thus, to deinterleave P2 symbols, receiver must know the number of OFDM symbols in P2 symbol. To do this, information about number of OFDM symbols which comprises P2 symbols can be included in a first OFDM symbol of either P1 symbol or P2 symbol. To be able to do that, number of OFDM symbols which comprise P2 symbols can be included in specific carriers of P1 or P2 symbol.

TFS system uses slots distributed over multiple RF channels and time for service multiplexing. Each service takes slot assigned by service multiplexer. Information such as location of service and size can be included in P2 and can be transmitted so that receiver can restore the service. At this time, location of service can be described by OFDM cell resolution, i.e., carrier.

A frame structure to locate data symbol (i.e., service) more efficiently is suggested. To locate service in OFDM symbol using service location included in P2 symbol, OFDM symbol number should be known. Thus, if each OFDM symbol can include an OFDM symbol number in a frame, receiver can locate service more efficiently.

In a TFS system, a receiver can switch RF channels periodically to receive a service. At this time, the time passed during switching RF channels can be varied, thus, number of OFDM symbols during the switching can be also varied. Consequently, if a location of OFDM symbol in a frame is known, wherein the OFDM symbol is received during RF channel switching, service location can be easily calculated regardless of when the RF channel is switched.

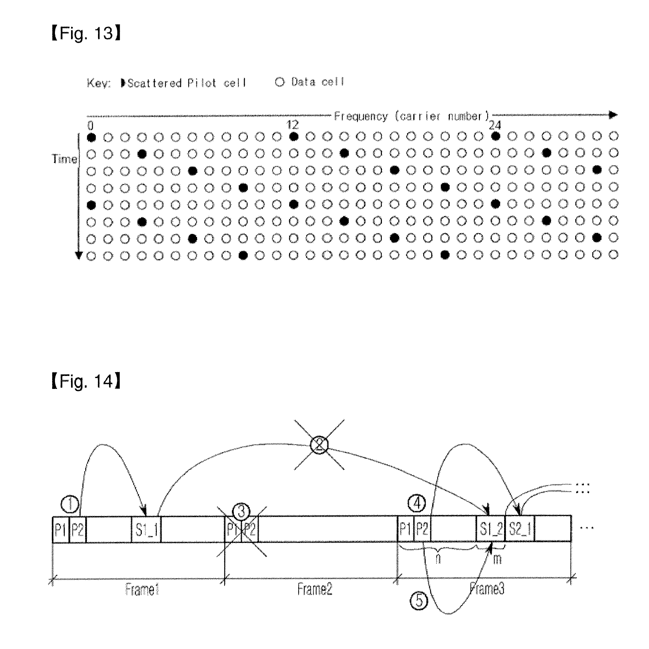

In addition, in prior art, scattered pilots are inserted into data symbol to extract channel that the data symbol has gone through. In this case, as shown in Fig. 13, the scattered pilot can show different patterns periodically. Thus, for a receiver to perform channel estimation for data symbol decoding by using scattered pilots, location of scattered pilots should be obtained. At this time, if receiver has OFDM symbol number, scattered pilot location can be obtained by just using the number.

Consequently, OFDM symbol numbering method according to present invention can eliminate additional calculation for extracting scattered pilot location and service location to decode data symbol.

Fig. 14 shows a structure where a service can be located by accessing the next service location information which is located inside an actual service in a TFS frame. Thus, accessing P2 symbol for the next service location information can be eliminated. When locating a service for the first time, receiver can locate services by accessing P2 symbols as shown in Fig. 14 as steps 1 and 4. When a service is already located, as shown in step 2, the next service can be directly accessed. If information about the next service location is damaged, as shown in step 2, next service can be located by accessing P2 symbol as shown in step 5.

The proposed novel P1 and P2 structure can reduce latency that is required during steps 1, 4, and 5 of Fig. 14 for locating service. If a length of TFS frame is 200 ms and six RF channels are used, P1/P2 symbols for each RF channel are 200/6 ms separated. In other words, a time to locate a new P2 symbol can be reduced to 200/6 ms from 200 ms using the proposed structure.

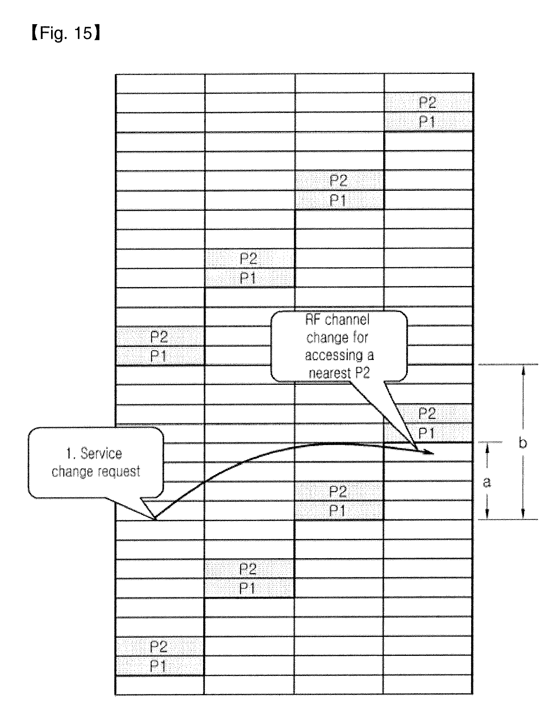

Fig. 15 shows one example of switching services. When a service change has been requested as shown in step 1 of Fig. 15, according to a conventional art, new service location can be located by accessing P2 with latency of b. In the structure according to present invention, P2, the nearest point from when a service request occurred, can be accessed (step 2 of Fig. 15). In this case, latency can be reduced to a. Thus, b-a of reduction in latency can be realized. This reduction in latency can be realized in any case where a receiver acknowledges TFS frame and a later service change request occurs or re-searching service is requested.

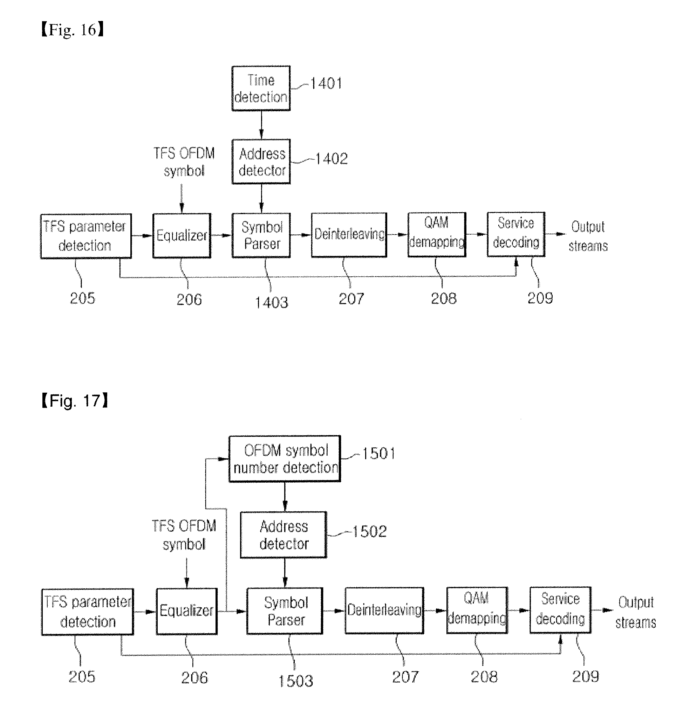

Fig. 16 shows a receiver which can be used in TFS system according to a prior art. Time detection (1401) can detect actual time passed while acquiring service location after RF channel is switched. Address detector (1402) can obtain service address and OFDM symbol number using the above passed time information. Symbol parser (1403) can obtain services. However, in real application, it may not be easy to detect the actual time passed.

Fig. 17 shows an example of a receiver according to present invention which can be used when service address is obtained from obtaining OFDM symbol from data symbol.

OFDM symbol number detection (1501) can obtain OFDM symbol number by using data symbol numbering information coming from Equalizer (206). Address detector (1502) can obtain service address using the number. Symbol Parser (1503) can obtain services required.

For OFDM symbol numbering, numerous methods can be used. As one of simplest way, specific carrier of data symbol can be assigned during OFDM symbol numbering.

Among many signaling used in TFS, there is a signaling related to layer information (L1). This can include FFT size, guard interval mode, and number of physical layer channel for services in TFS frame. In addition to the information, numerous physical layers, service layer information can be transmitted by L1 signaling. The aforementioned information does not change much and is not necessary to be transmitted in each TFS frame, thus, can be regarded as static layer information (L1 static).

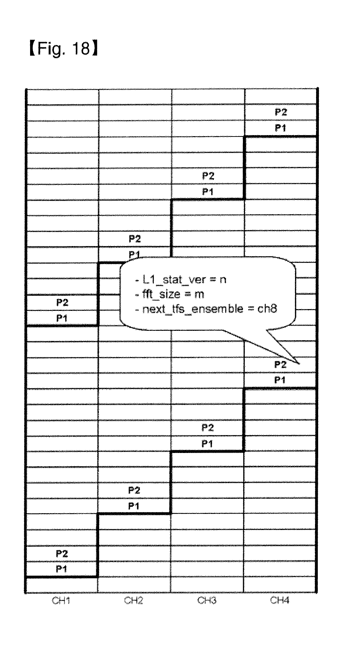

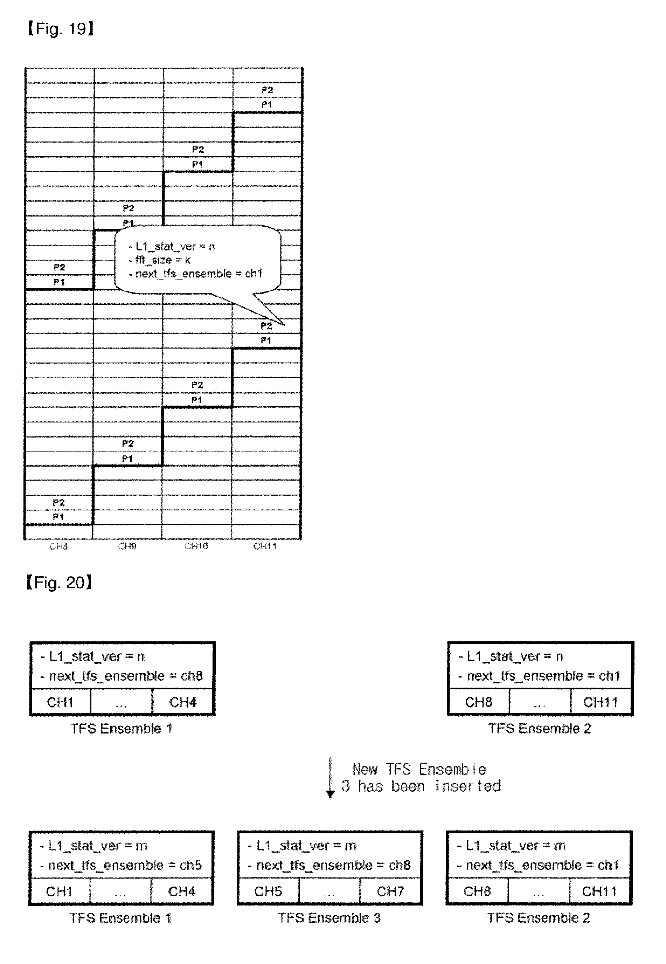

As shown in Figs. 18 and 19, information describing change of physical layer signaling information used by TFS ensemble can be inserted into that L1 static. In addition, FFT size being used can be added. The L1 is included in the P2. The L1 can include a field which indicates a change of information of L1. The field can be included in either static part of L1 or dynamic part of L1.

According to present invention, channel information used by TFS ensemble can be included in next_tfs_ensemble field. Information about whether layer information is renewed or not can be included in L1_sat_ver field. FFT size can be included in fft_size field.

By using multiple RF channels, multiple TFS ensembles can exist simultaneously. In this case, receiver should scan to find all frequency range such as UHF/VHF to find the multiple TFS services. This can be time consuming and ineffective.

According to the present invention, when a single TFS ensemble is found, scanning all RF frequency range can become unnecessary because the found ensemble has information of following TFS RF channel.

In addition, as shown in Fig. 20, if a new TFS channel is added, next_tfs_ensemble can have different value, and for this case, Ll_stat_ver value can be renewed and saved. Consequently, receiver can automatically recognize newly added TFS ensemble.

It will be apparent to those skilled in the art that various modifications and variations can be made in the present invention. Thus, it is intended that the present invention covers the modifications and variations of this invention provided they come within the scope of the appended claims.

To summarize, there has been disclosed a receiver for an OFDM (Orthogonal Frequency Division Multiplexing) system including TFS (Time Frequency Slicing), comprising:
a front end to receive RF signals which include data symbol containing service data, a first pilot symbol for indicating TFS, and a second pilot symbol containing information to access the data symbol, wherein the front end is configured to access an RF band which has a nearest second pilot symbol from a point of request for a change of service in a time domain;
a synchronizer to detect synchronization information from the received RF signals and compensate the received RF signals;
a demodulator to demodulate the first pilot symbol, the second pilot symbol, and the data symbol;
an equalizer to compensate a distortion of the demodulated signal;
a parameter detector to detect a frame structure information from the second pilot symbol and data symbol from the compensated RF signals; and
a decoder to decode a physical layer data from the compensated RF signals.

According to embodiments, taken either alone or in combination:

- the synchronizer detects FFT (Fast Fourier Transformation) size of the symbols by performing correlation calculation on guard intervals of the symbols;

- the demodulator demodulates the symbols based on the detected FFT size of the symbols and the guard intervals;

- the second pilot symbol includes a layer information, wherein the layer information includes a field which indicates a change of information of the layer information.

- the field is included in a static part of the layer information and/or a dynamic part of the layer information; and,

- the first pilot symbol and the second pilot symbol are inserted in each RF channel and the first pilot symbol and the second pilot symbol inserted in one RF channel are located at a different location in time domain from the first pilot symbol and the second pilot symbol inserted in the other RF channel.

A method of receiving signals for an OFDM (Orthogonal Frequency Division Multiplexing) system including TFS (Time Frequency Slicing), comprises:
receiving RF signals which include data symbol containing service data, a first pilot symbol for indicating TFS, and a second pilot symbol containing information to access the data symbol;
detecting synchronization information from the received RF signals and compensating the received RF signals;
demodulating the received RF signals including the first pilot symbol, the second pilot symbol, and the data symbol;
compensating a distortion of the demodulated signals;
detecting a structure information from the second pilot symbol and data symbol from the compensated signals;
decoding a physical layer data from the compensated signals; and
accessing an RF band which has a nearest second pilot symbol from a point of request for a change of service in a time domain.

According to embodiments, taken either alone or in combination:
- the step of detecting the synchronization information further comprises detecting FFT (Fast Fourier Transformation) size of the symbols by performing correlation calculation on guard intervals of the symbols;

- the step of demodulating the symbols is based on the detected FFT size of the symbols and the guard intervals; and,

- the method further comprises receiving the RF signals, wherein the received RF signals include the first pilot symbol and the second pilot symbol inserted in each RF channel and the first pilot symbol and the second pilot symbol inserted in one RF channel are located at a different location in time domain from the first pilot symbol and the second pilot symbol inserted in the other RF channel;

- the step of receiving the RF signals further comprises receiving the RF signals, wherein the received RF signals include the second pilot symbol, wherein the second pilot symbol includes a layer information, wherein the layer information includes a field which indicates a change of information of the layer information; and

- the field is included in a static part of the layer information and/or a dynamic part of the layer information.

## Claims

1. A method of transmitting a broadcasting signal, the method comprising:
encoding bits of Lawyer-1, L1, signaling data by a Forward Error Correction, FEC, scheme, wherein the L1 signaling data includes L1_CHANGE information indicating that the contents of the L1 signaling data will change;
mapping bits of the encoded L1 signaling data into L1 signaling data symbols;
frequency-interleaving the mapped L1 signaling data symbols;
modulating the frequency-interleaved L1 signaling data symbols by an Orthogonal Frequency Division Multiplexing, OFDM, method; and,
transmitting a signal frame including preamble and service data, wherein the preamble includes P1 and P2 at the beginning of the signal frame and the P2 includes the L1 signaling data symbols.

2. The method according to claim 1, wherein the L1_CHANGE information is included in a dynamic part of the L1 signaling data.

3. The method according to claim 1 or 2, wherein the signal frame has at least one RF channel.

4. The method according to any one of claims 1 to 3, wherein the P1 preceding the P2 has data for signaling the P2 and the P2 has the L1 signaling data for signaling the service data.

5. The method according to any one of claims 1 to 4, wherein the P1 includes information of a guard interval or a FFT size for the service data.

6. The method according to any one of claims 1 to 5, further comprising inserting the P1 into the signal frame after the modulating step.

7. The method according to any one of claims 1 to 6, wherein the L1 signaling data includes information of OFDM_SYMBOL_NUMBER that indicates the number of OFDM symbols in the signal frame.

8. An apparatus for transmitting a broadcasting signal, the apparatus comprising:
means for encoding bits of Layer-1, L1, signaling data by a Forward Error Correction, FEC, scheme, wherein the L1 signaling data includes L1_CHANGE information indicating that the contents of the L1 signaling data will change;
means for mapping bits of the encoded L1 signaling data into L1 signaling data symbols;
means for frequency-interleaving the mapped L1 signaling data symbols;
means for modulating the frequency-interleaved L1 signaling data symbols by an Orthogonal Frequency Division Multiplexing, OFDM, method; and
means for transmitting a signal frame including preamble and service data, wherein the preamble includes P1 and P2 at the beginning of the signal frame and the P2 includes the L1 signaling data symbols.

9. The apparatus according to claim 8, wherein the L1_CHANGE information is included in a dynamic part of the L1 signaling data.

10. The apparatus according to claim 8 or 9, wherein the signal frame has at least one RF channel.

11. The apparatus according to any one of claims 8 to 10, wherein the P1 preceding the P2 has data for signaling the P2 and the P2 has the L1 signaling data for signaling the service data.

12. The apparatus according to any one of claims 8 to 11, wherein the P1 includes information of a guard interval or a FFT size for the service data.

13. The apparatus according to any one of claims 8 to 12, further comprising means for inserting the P1 into the signal frame.

14. The apparatus according to any one of claims 8 to 13, wherein the L1 signaling data includes information of OFDM_SYMBOL_NUMBER that indicates the number of OFDM symbols in the signal frame.
